Europäisches Patentamt

European Patent Office

Office européen des brevets

(19)

(11) Veröffentlichungsnummer: **0 347 731 B1**

# EUROPÄISCHE PATENTSCHRIFT

(12)

(45) Veröffentlichungstag der Patentschrift: **08.12.93**

(51) Int. Cl.5: **A01N 59/00**

(21) Anmeldenummer: **89110749.2**

(22) Anmeldetag: **14.06.89**

(54) **Verfahren zur Schädlingsbekämpfung an Pflanzen, insbesondere an Weinreben, Hopfenreben oder dergleichen.**

(30) Priorität: **18.06.88 DE 3820663**

(43) Veröffentlichungstag der Anmeldung:
**27.12.89 Patentblatt 89/52**

(45) Bekanntmachung des Hinweises auf die
Patenterteilung:
**08.12.93 Patentblatt 93/49**

(84) Benannte Vertragsstaaten:
**AT BE CH DE ES FR GR IT LI NL**

(56) Entgegenhaltungen:
EP-A- 0 035 800          EP-A- 0 087 049
DD-A- 239 109            DE-A- 3 438 946
FR-A- 401 898            FR-A- 1 590 621
GB-A- 2 218 083          US-A- 4 067 717

CHEMICAL PATENTS INDEX BASIC AB-
STRACTS JOURNAL, Sektion C, AGDOC, 30.
April 1986, Zugangsnummer 86-066085/10,
Derwent Publications Ltd, London, GB; & JP-
A-61 018 704 (K. TAKAHASHI)

H. SCHLÖR et al.: "Chemie der Pflanzenschutz und Schädlingsbekämpfungsmittel",
Band 2, 1970, Seiten 45-161, Springer-Verlag,
Berlin, DE

(73) Patentinhaber: **Schätzlein, Helmut**
**Würzburger Strasse 6**
**D-97246 Eibelstadt(DE)**

(72) Erfinder: **Schätzlein, Helmut**
**Würzburger Strasse 6**
**D-97246 Eibelstadt(DE)**

(74) Vertreter: **Ratzel, Gerhard, Dr.**
**Seckenheimer Strasse 36a**
**D-68165 Mannheim (DE)**

EP 0 347 731 B1

**Beschreibung**

Die Erfindung bezieht sich auf ein Verfahren zur Schädlingsbekämpfung an Pflanzen, insbesondere Weinreben, Hopfenreben oder dergleichen.

Durch pilzliche Schadorganismen, insbesondere in Form von Peronospora (Plasmopara viticola), Botrytis cinerea, Oidium und Schwarzfleckenkrankheit (Phomopsis vitivola Sacc.), sowie dem Bakterium Agrobacterium tumefaciens (Mauke) an Weinreben, mussten die Winzer schon früher große Ertragseinbußen hinnehmen. Beim Auftreten größerer Infektionen kam es vor, daß ganze Ernten verdarben. Erst im 19.Jahrhundert entdeckte man, daß Lösungen von Kupfervitriol gegen Peronospora eingesetzt werden konnten. Dadurch wurden jedoch bis heute die Weinbergböden mit dem Schwermetall Kupfer in erheblichem Ausmaß belastet. Im 20.Jahrhundert entwickelte dann die chemische Industrie synthetische Pflanzenschutzmittel gegen Pilze. Diese Mittel wirken jedoch nur selektiv gegen bestimmte Pilze und zeigen keine Wirkung bei Bakterien. Bestimmte Pilzarten haben inzwischen gegen synthetische Pflanzenschutzmittel resistente Stämme gebildet, was auch z.B. für die Botrytizide gilt, die nur noch geringe Wirkung zeigen. Hinzu kommt als weiterer Nachteil, daß die derzeitigen Fungizide im Weinbau immer vorbeugend als Schutzbelag oder systematisch alle 10 - 14 Tage ausgebracht werden müssen. Aufgrund ihrer teilweisen hohen Giftigkeit müssen außerdem lange Wartezeiten im letzten Spritzeinsatz bis zur Traubenlese eingehalten werden, da sonst sowohl der Wirkstoff, als auch Abbauprodukte und Formulierungshilfsstoffe dieser synthetischen Pflanzenschutzmittel im Lebensmittel Traube und Wein vorhanden sein können. Trotzdem läßt sich bis heute unter gewissen Witterungsbedingungen nicht verhindern, daß Rückstände dieser Pflanzenschutzmittel im Wein auftreten und dort Fehltöne (Böckser) oder Trübungen (durch Kupfer) verursachen können, welche nur mit hohem Aufwand und dem Nachteil einer Qualitätsminderung beseitigt werden können. Im übrigen ist die Verwendung von Pflanzenschutzmitteln, die mutagene und kanzerogene Einflüsse haben, für Mensch und Tier sehr bedenklich. Da ferner diese bekannten Pflanzenschutzmittel nicht nur eine teilweise Schädigung der Rebstöcke bewirken, sondern sich auch insgesamt negativ auf die gesamte Umwelt auswirken, die Gewässerbelastung eingeschlossen, versuchen heute schon wieder Winzer, wie in früherer Zeit, als man noch keine synthetischen Pflanzenschutzmittel kannte, durch biologische Methoden und den Einsatz von pflanzlichen Jauchen und Tinkturen alternativen Pflanzenschutz zu betreiben. Diese selbst hergestellten und nicht zulassungspflichtigen Schutzmittel sind jedoch in ihrer Wirkung nur sehr gering oder gar vollkommen wirkungslos und können sich vor allem deutlich negativ auf den Weingeschmack und damit die Weinqualität auswirken.

Beim Einsatz herkömmlicher synthetischer Pflanzenschutzmittel ist man ferner zur Reduzierung der Umweltbelastung bestrebt, sogenannte Tropf- und Abtrittsverluste auf den Weinbergsboden und die Wege möglichst zu vermeiden. Somit wird auch keine gezielte Behandlung des Weinbergbodens vorgenommen und dieser bleibt daher ein ständiger Pilz- und Bakterien-Herd für Reinfektionen der Weinreben.

Der Erfindung liegt die Aufgabe zugrunde, ein hochwirksames Verfahren zur Schädlingsbekämpfung an Pflanzen, insbesondere Weinreben anzugeben, welches besonders umweltfreundlich ist und z.B. bei Anwendung im Weinbau eine hervorragende Weinqualität in Bezug auf Natürlichkeit und Bekömmlichkeit gewährleistet.

Obige Aufgabe wird erfindungsgemäß gelöst durch die Verwendung einer Wasserstoffperoxid ($H_2O_2$) oder Ozon ($O_3$) enthaltenden wässrigen Lösung als Sprühmittel zur Schädlingsbekämpfung an Pflanzen, z.B. Weinreben, Hopfenreben oder dergleichen. Solche Wasserstoffperoxid oder Ozon enthaltenden wässrigen Lösungen, teils auch unter Beimengung von Bioziden oder unterstützenden Wirkstoffen, wurden bisher nur zur Desinfektion und zum Bleichen benutzt. Ihre erfindungsgemäße Verwendung als Sprühmittel zur Schädlingsbekämpfung bringt zahlreiche Vorteile. Die Oxidationsmittel in Form von Wasserstoffperoxid oder Ozon sind äußerst wirksam bei der Bekämpfung der hier infragestehenden pilzlichen Schadorganismen und Bakterien. Die Konzentration von Wasserstoffperoxid ($H_2O_2$) in dem Sprühmittel kann bis zu 35 % betragen und bei Ozon bis zu 0,001 %. Wasserstoffperoxid wird als Oxidationsmittel bevorzugt, da der Einsatz von Ozon umständlicher ist. Dabei kann vorteilhaft konfektioniertes, z.B. als Desinfektionsmittel im Handel erhältliches Wasserstoffperoxid verwendet werden. Das Wasserstoffperoxid enthaltende Sprühmittel wird erst nach Auftreten einer pilzlichen Infektion zur Abtötung der Pilze eingesetzt, zeigt eine heilende Wirkung und braucht nicht mehr so häufig verspritzt werden, wie herkömmliche Pflanzenschutzmittel.

Eine Steigerung der Wirkung des Oxidationsmittels "Wasserstoffperoxid" kann, wie beim herkömmlichen Pflanzenschutz, durch indirekte Pflanzenschutzmaßnahmen, z.B. im Weinbau auf den Rebbestand abgestimmte Düngung und Laubarbeit (luftige Erziehungsweise) erfolgen. In diesem Sinne ist auch der Einsatz und die Durchführung einer optimalen Applikation des Sprühmittels von Bedeutung.

Da Wasserstoffperoxid ohne Hinterlassung von negativen Rückständen in relativ kurzer Zeit in Wasser und Sauerstoff zerfällt, kann das Sprühmittel mit diesem Oxidationsmittel im Weinbau auch noch kurz vor Beginn der Traubenlese eingesetzt werden, falls eine pilzliche Spätinfektion im Weinberg auftritt. Zu einem Zeitpunkt, bei dem also herkömmliche Pflanzenschutzmittel ihre Wirkung bereits verloren haben und aufgrund der gesetzlich vorgeschriebenen Wartezeit vor der Traubenlese nicht mehr eingesetzt werden dürfen, kann somit vorteilhaft noch Pflanzenschutz mit dem Wasserstoffperoxid enthaltenden Sprühmittel betrieben werden. Weitere Vorteile der Erfindung bestehen darin, daß es nun möglich ist, gesünderes Lesegut als bisher, d.h. ohne pilzliche Infektion (insbesondere durch Botrytis) zu ernten, was wiederum zu bekömmlicheren Weinen führt und die kellerwirtschaftliche Weiterverarbeitung des Lesegutes erheblich erleichtert. Denn es kann dann vor allem im Trauben-, Maische- und Most-Stadium auf Schwefel zum Schutz vor Oxidation und mikrobiologisch negativen Einflüssen ganz oder mindestens weitgehend verzichtet werden. Außerdem wird durch die Reduzierung des Botrytispilzes, welcher für die unerwünschten Oxidationsenzyme verantwortlich ist, auch der Anteil dieser Enzyme reduziert und es werden somit ideale Voraussetzungen für die Herstellung schwefelarmer bis schwefelfreier Weine geschaffen. Mit der modernen Kellerwirtschaft ist man heute in der Lage, ohne den Einsatz irgendwelcher Stoffe oder Hilfsmittel (zur Schönung) nur durch eine Filtration und den Zusatz geringer Mengen an Schwefel Wein auszubauen. Es können somit vollkommen naturbelassene und reintönige Weine erzeugt werden, was bei Verwendung von synthetischen oder alternativen Pflanzenschutz- und Pflegemitteln aufgrund von deren negativen Auswirkungen im Weinausbau nicht möglich ist.

Ein bevorzugtes Ausführungsbeispiel der Erfindung für den Weinbau geht aus dem Anspruch 2 hervor, eine weitere Ausbildung aus dem Anspruch 3.

Die Erfindung wird anschließend anhand von Wasserstoffperoxid enthaltenden wässrigen Lösungen erläutert, die im Weinbau als Sprühmittel zur Schädlingsbekämpfung eingesetzt werden können. Die im folgenden verwendeten Größen für die Entwicklungsstadien von Reben sind der von Eichhorn und Lorenz aufgestellten Skala entnommen, die im Nachrichtenblatt des Deutschen Pflanzenschutzdienstes, Braunschweig, 29.1977 veröffentlicht ist. Zunächst wurde die Rebenverträglichkeit solcher Sprühmittel in Versuchen ermittelt. Es zeigte sich, daß bis zum phaenologischen Reben-Entwicklungsstadium 03 im Handel erhätliches 35%iges Wasserstoffperoxid mit einem Anteil bis zu 15 % mit Wasser angesetzt als Sprühmittel eingesetzt werden kann, wobei es eine hervorragende Wirkung zur Bekämpfung von allen weinbaulichen pilzlichen Schadorganismen und Bakterien besitzt. Auf höhere Konzentrationen von Wasserstoffperoxid sollte aus verschiedenen Gründen verzichtet werden. Durch gezielte ganzflächige Besprühung des Weinbergbodens mit dieser Wasserstoffperoxid enthaltenden wässrigen Lösung kann auch der latente pilzliche und bakterielle Infektionsdruck im Weinberg reduziert werden.

In den Reben-Entwicklungsstadien 05-38 sollte für die Behandlung durch Spritzen die Untergrenze für die Wassermenge bei 2.000 1/ha liegen, wobei die zugegebene Wirkstoffmenge, nämlich 35%iges Wasserstoffperoxid ca. 1 % betragen kann. Diese Anwendung kann als Grundlage für die Behandlung von Weinreben mit einer Wasserstoffperoxid enthaltenden wässrigen Lösung angesehen werden. Während der Vegetation und der einzelnen Entwicklungsstadien der Weinreben sollte bei Anwendung des Sprühverfahrens die Konzentration des Wasserstoffperoxids in dem Sprühmittel nicht mehr als 5 % betragen.

Versuche haben ergeben, daß sich folgende Konzentrationen von 35%igem Wasserstoffperoxid in nachstehenden Sprühmittelmengen bei der Schädlingsbekämpfung im Weinbau noch als wirkungsvoll erwiesen:

400 1/ha mit 5%igem Anteil von $H_2O_2$ in einer Konzentration von 35 %

500 1/ha mit 4%igem Anteil von $H_2O_2$ in einer Konzentration von 35 %

650 1/ha mit 3%igem Anteil von $H_2O_2$ in einer Konzentration von 35 %.

Die beste Wirkung bei voller Laubwand liegt bei 5%igem Wasserstoffperoxidanteil und 600 l Sprühmittel/ha. Muß eine Pflanzenschutzbehandlung unmittelbar in die abgehende Blüte (Rebenentwicklungsstadium 25) erfolgen, hat man durch Versuche ermittelt, daß bereits mit 1%iger Konzentration von Wasserstoffperoxid im Sprühmittel bei 650 1/ha Sprühmittelaufwand eine gute Wirkung gegen Gescheinsbotrytis erreicht wird.

Schließlich haben Versuche gezeigt, daß bei Verwendung des erfindungsgemäßen Sprühmittels auch nach einer Vegetationsperiode alle tierischen Nützlinge, welche die Schädlinge parasitieren, somit dezimieren und früher durch den Einsatz von synthetischen Pflanzenschutzmitteln selbst in großem Ausmaß vernichtet wurden, sich wieder vermehren. Daher braucht man bei Anwendung des erfindungsgemäßen Sprühmittels z.B. im Weinbau keine hochgiftigen Insektizide mehr zur Bekämpfung tierischer Schädlinge einzusetzen.

Weitere Ausgestaltungen der Erfindung gehen aus den weiteren Unteransprüchen hervor.

Wenn nach einer Ausgestaltung der Erfindung die als Schädlingsbekämpfungsmittel (Sprühmittel) dienende wässrige Lösung Beimengungen von unterstützenden Wirkstoffen, wie z.B. Calciumverbindungen enthält, wird die fungizide Wirkung des Schädlingsbekämpfungsmittels (Sprühmittels) erhöht und die Wirtschaftlichkeit des erfindungsgemäßen Verfahrens weiter verbessert. Das Sprühmittel kann dadurch vorteilhaft zur Bekämpfung praktisch aller pilzlicher und bakterieller Schadorganismen sowie Viren an Pflanzen aller Art eingesetzt werden, an Weinreben ebenso wie im Obst-, Garten- und Gemüsebau. Auch der Befall von Getreide- und Maispflanzen sowie Raps durch pilzliche Schädlinge läßt sich mit einem solchen Schädlingsbekämpfungsmittel (Sprühmittel) unterhalb der Schadschwelle halten.

Für den Fall des Einsatzes organischer Persäuren, z.B. von Peressigsäure, und/oder Perameisensäure und/oder Perpropionsäure und/oder Perbuttersäure und/oder Perglutarsäure, zeigt eine solche Anwendungslösung bei relativ hoher Säurekonzentration in dem Sprühmittel bei Anwendung auf Unkräuter und Ungräser vorteilhaft auch eine herbizide Wirkung. Die sich daraus ergebende gleichzeitige Möglichkeit der Unkrautbekämpfung ist frei von schädlichen Rückständen und umweltfreundlich. Auch kann man dieses Schädlingsbekämpfungsmittel (Sprühmittel) vorteilhaft z.B. zur Beseitigung von unerwünschten Rebtrieben an Stämmen von Weinreben benutzen.

Wenn nach einer weiteren Ausgestaltung der Erfindung dem Schädlingsbekämpfungsmittel ( = Sprühmittel) als unterstützender Wirkstoff Schwefel, vorzugsweise Netzschwefel beigemengt wird, wird insbesondere die Bekämpfung von Oidium und Milben verbessert.

Eine weitere Ausbildung der Erfindung ist dadurch gekennzeichnet, daß dem Schädlingsbekämpfungsmittel (Sprühmittel) ein pflanzenstärkender Wirkstoff z.B. eine Magnesiumverbindung etwa in Form von Magnesiumchlorid ($MgCl_2$) oder von handelsüblichem Magnesiumsulfat ($MgSO_4$) beigemengt wird. Ein solches Shädlingsbekämpfungsmittel (Sprühmittel) ist nicht nur in fungizider oder bakterieller Hinsicht wirksam, sondern wirkt zugleich auch als pflanzenstärkender Blattdünger. Für Weinreben ist z.B. Magnesium ein wichtiger Nährstoff, der insbesondere gegen die sogenannte Stiellähme bei Trauben wirksam ist und somit Botrytis verhindert.

Wenn nach einer weiteren Ausbildung der Erfindung dem Schädlingsbekämpfungsmittel (Sprühmittel) wenigstens ein die Schädlingsbekämpfung unterstützender Wirkstoff und wenigstens ein pflanzenstärkender Wirkstoff beigemengt werden, erhält man ein besonders vielseitiges Pflanzenschutz- und Pflanzenstärkungsmittel.

Für den kombinierten Einsatz von Wasserstoffperoxid und Persäuren, z.B. Peressigsäure, und/oder Perameisensäure und/oder Perpropionsäure und/oder Perbuttersäure und/oder Perglutarsäure, haben Versuche ergeben, daß eine zufriedenstellende fungizide Wirkung des Sprühmittels bereits bei einer Persäurekonzentration der obigen Lösung von 0,07 % erzielt werden, und zwar bei einer optimalen Sprühtechnik. Bei einer Konzentration von Persäure von 0,4% - 0,7 % können selbst Sporen und Sporenbildner, sowie Bakterien und Viren aller Art vollständig vernichtet werden.

Ein weiteres Anwendungsgebiet für das Sprühmittel ergibt sich bei relativ hoher Konzentration (bis zu ca. 15%) der Persäure. In diesem Fall kann das Sprühmittel gezielt als Herbizid zur Unkrautbekämpfung eingesetzt werden. Bei Versprühung unter der Rebzeile lassen sich vor allem die sogenannten Stockausschläge (junge Triebe), welche sonst aufwendig von Hand entfernt werden müssen, beseitigen. Eine relativ höhere Umgebungs-Lufttemperatur um 20 ° C ist in diesem Fall für die angestrebte Wirkung vorteilhaft.

Zur Verbesserung der Oidiumbekämpfung und der Bekämpfung von Milben an Weinreben kann man das Wasserstoffperoxid oder auch Persäure enthaltenden Schädlingsbekämpfungsmittel (Sprühmittel) Schwefel beimengen. Versuche haben ergeben, daß der Schwefelanteil an 0,05 - 15%igen Schädlingsbekämpfungsmittel (Sprühmittel) zwischen 1 - 7,5 kg/ha Anwendungsfläche betragen sollte. Auch in diesem Fall verbessert sich die angestrebte Wirkung, wenn das Schädlingsbekämpfungsmittel (Sprühmittel) bei relativ höherer Umgebungs-Lufttemperatur eingesetzt wird.

Gibt man der Wasserstoffperoxid enthaltenden und als Schädlungsbekämpfungsmittel (Sprühmittel) dienenden wässrigen Lösung eine Magnesiumverbindung bei, so erzielt man beim Sprüheinsatz im Weinberg nach der Blüte eine die sogenannte Stiellähme von Trauben hemmende und somit ertrags- und qualitätsstabilisierende Wirkung. Der Anteil von z.B. Magnesiumsulfat in dem Schädlingsbekämpfungsmittel (Sprühmittel) betrug bei einem derartigen Versuch 10 kg/ha Rebfläche. Aber auch bei anderen Pflanzen zeigte die Anwendung dieses Schädlingsbekämpfungsmittels (Sprühmittels) einen besseren Wuchs bzw. eine höhere Assimilationsleistung.

Die sprunghafte Überlegenheit des Gegenstands vorliegender Erfindung wird im folgenden anhand eines zahlenmäßig gehaltenen Vergleichsversuchergebnisses weiterhin erläutert.

Vergleichsversuch
----------------

Anwendungsgebiet: Botrytis an Trauben

Aufwandsmenge: 2 - 3%iges wässriges $H_2O_2$, bezogen auf eine 35 %ige wässrige $H_2O_2$-Lösung

Art: VITVI (Weißwein)

Sorte: KERNER

Anwendungstechnik: Erfindungsgemäßes Verfahren

2 - 3 % Konzentration

Vergleichsmittel des Standes der Technik (VINCLOZOLIN (Pulver))

0,1 % Wirkstoff in $H_2O$ aufgeschlämmt

Versuchsergebnisse:

| Zählen der befallenen Trauben | Unbehandelt | | Mittel gemäß der Erfindung | | Vergleichsmittel des Standes der Technik (VINCLOZOLIN) | |
|---|---|---|---|---|---|---|
| | BH % | BS 0-3 | BH % | BS 0-3 | BH % | BS 0-3 |
| 1.Wiederholung | 8,0 | 0,08 | 8,0 | 0,08 | 11,0 | 0,11 |
| 2.Wiederholung | 11,0 | 0,11 | 9,0 | 0,09 | 17,0 | 0,17 |
| 3.Wiederholung | 11,0 | 0,11 | 14,0 | 0,14 | 3,0 | 0,03 |
| 4.Wiederholung | 20,0 / 12,5 | 0,21 / 0,128 | 11,0 / 10,2 | 0,12 / 0,108 | 14,0 / 11,2 | 0,14 / 0,112 |
| Wirkungsgrad | - | - | 15,6 | | 12,5 | |

\* BH = Befallshäufigkeit der Botrytis an Trauben

\* BS = Befallstärke der Botrytis an Trauben

Insgesamt ist also festzustellen, daß der Erfindung die überraschende Erkenntnis zugrunde liegt, daß es unter Ausschaltung der bisher üblichen vorbeugenden Schutzmaßnahmen nunmehr möglich ist, nachträglich, d.h. erst nach Auftreten eines Schädlingsbefalls das Schädlingsbekämpfungsmittel (Sprühmittel) einzusetzen. Dadurch wird eine höhere Wirtschaftlichkeit und eine Schonung der Umwelt erzielt.

Da das Wasserstoffperoxid allgemein handelsüblich in einer Konzentration von 35 % in Wasser vorliegt, beziehen sich die % - Angaben an Wasserstoffperoxid auf diese 35 %ige wässrige Lösung als Basis bzw. Bezugsgröße.

Um also die im Vergleichsversuch genannte 2 bzw. 3%ige wässrige $H_2O_2$-Lösung herzustellen, werden 2 bzw. 3 Liter einer 35 %igen wässrigen $H_2O_2$-Lösung mit 98 bzw. 97 Litern Wasser verdünnt. Die Prozentangaben sind Gewichts-Prozentangaben.

Neben der eindeutigen Überlegenheit des Wirkungsgrades des erfindungsgemäß einzusetzenden Schädlingsbekämpfungsmittels (Sprühmittels) kommt also als weiterer sprunghaft fortschrittlicher Aspekt die Tatsache hinzu, daß das erfindungsgemäße Verfahren zur Schädlingsbekämpfung kurativ angewendet wird,

5

d.h. erst nach Auftreten eines Schädlingsbefalls. Diese kurative Anwendung ist sowohl aus Umweltschutzgründen als auch Gründen einer größeren Wirtschaftlichkeit dem prophylaktischen Verfahren sprunghaft überlegen.

Im folgenden werden weitere Pflanzenschutzversuche an Weinreben und Edelreißern gemäß vorliegender Erfindung geschildert.

Die Konzentrationen lagen bei allen Versuchsgliedern bei 0,05 - 3,5 % Wasserstoffperoxid bezogen auf die handelsübliche 35 %ige wässrige Wasserstoffperoxid-Lösung.

Die Applikation erfolgte als Sprüh- oder Gießmittel, sowie im Tauchverfahren.

Reben:

Der Pflanzenschutz wurde kurativ d.h. bei oder nach Auftreten der pilzlichen Infektion durchgeführt. Insbesondere wurden Peronospora, Botrytis, Oidium, Roter Brenner und die Schwarzflecken-Krankheit bekämpft.

Die Weißwein-Rebsorten, an denen die Versuche durchgeführt wurden, waren: Silvaner, Scheurebe, Kerner und Bacchus, sowie bei den Rotwein-Rebsorten: Spätburgunder und Dornfelder, auf einer Gesamt-Rebfläche von 2 ha, was unter Versuchsbedingungen einen Großversuch bedeutet.

Die Pflanzweiten der Rebanlagen lagen bei 1,60 m x 1,30 m und 1,7o m x 1,3o m.

Die Applikation wurde mittels eines Tangential-Querstrom-Gebläses durchgeführt, wobei überwiegend mit einer 3 %igen Lösung des Prüfmittels (interne Bezeichnung: Bio 2000), also einem 3 %igen Wasserstoffperoxid bezogen auf eine 35 %ige wässrige Wasserstoffperoxid-Lösung, gearbeitet wurde.

Bei einem sich über 2 Jahre erstreckenden Behandlugnszeitraum waren aufgrund der kurativen Bekämpfungsweise zwischen 1 und 5 Behandlungen notwendig. Bei einem Durchschnitt von 4 Behandlungen liegt dies 20 - 30 % unter dem traditionellen Behandlungsbedarf.

Da bei dieser Verfahrensweise eine Erstinfektion an Rebblättern geduldet wird, kam es durch die erwähnten Pilze zu einer Befallshäufigkeit an den Blättern von 0 - 18 % und zu einem Wirkungsgrad des erfindungsgemäß anzuwendenden Prüfmittels im Vergleich zur unbehandelten Parzelle von 52 - 85 %.

Schäden an den Reben entstanden durch das Prüfmittel nicht.

An den Trauben kam es in beiden Jahren zu einer Befallshäufigkeit von 0 - 5 %. Der Wirkungsgrad des Prüfmittels lag im Vergleich zur unbehandelten Parzelle bei 15 - 80 %.

Die Weine konnten schwefelfrei ausgebaut werden und zeigten keine Fehltöne, wie sie von herkömmlichen oder biologischen Pflanzenschutzmitteln verursacht werden können.

Die Vergleichs-Wirkstoffe waren:

gegen Peronospora: Kupferoxichlorid und Mancozeb
gegen Botrytis : Vinclozolin
gegen Oidium : Triadimefon
gegen Schwarzflocken-Krankheit und gegen Roten Brenner : Metiram

Edelreis und Unterlage:

Neben der Anwendung an grünen Rebpflanzen erfolgte auch eine Behandlung von Edelreisern und Unterlagen, also am Holz in Form einer Stand-Desinfektion bzw. die Durchführung des Pflanzenschutzes im Tauchverfahren, jeweils nach dem erfindungsgemäßen Verfahren.

Je nach Sporenhäufigkeit lag die Konzentration zwischen 0,5 % und 5 % Wasserstoffperoxid bezogen auf eine 35 %ige wässrige Wasserstoffperoxid-Lösung.

Es zeigte sich nach erfolgter Kopulation von Edelreis mit Unterlage ein deutlich gesteigertes Austriebsverhalten der jungen Reben.

Insbesondere wurde jedoch eine Bakterien- und Virenfreiheit festgestellt, was eine sehr große d.h. sprunghafte Wertsteigerung des jungen Pflanz- bzw. Rebgutes bedeutet.

Auch auf diesem Anwendungsgebiet ist also vorliegende Erfindung von großer Bedeutung.

Pflanzenschutzversuche im Gemüsebau und Salatanbau:

Hier wurde in einfachen Versuchen gegen eine unbehandelte Variante ermittelt, wobei ein 95%ger Wirkungsgrad gegen alle pilzlichen Schadorganismen, insbesondere gegen Mehltau erreicht wurde. Die Anwendung erfolgte im Gießverfahren jeden zweiten Tag mit einer Konzentration von 0,15 - 1,0 % Wasserstoffperoxid bezogen auf eine 35 %ige wässrige Wasserstoffperoxid-Lösung.

In dieser Offenbarung sind alle %-Angaben Gewichtsprozente.

**Patentansprüche**

1. Verfahren zur Schädlingsbekämpfung an Pflanzen,
dadurch gekennzeichnet,
daß eine von 0,1 bis 15 % Wasserstoffperoxid ($H_2O_2$) enthaltende wässrige Lösung auf die Pflanzen aufgesprüht wird, wobei im Gartenbau vorkommende Pflanzen ausgenommen sind.

2. Verfahren nach Anspruch 1,
dadurch gekennzeichnet,
daß die verwendete wässrige Lösung ein Gehalt an $H_2O_2$ von 0,5 bis 5 % aufweist.

3. Verfahren nach Anspruch 1 und 2,
dadurch gekennzeichnet,
daß die zu behandelnden Pflanzen Wein- und Hopfenreben sind.

4. Verfahren nach einem der vorhergehenden Ansprüche,
dadurch gekennzeichnet,
daß die zu bekämpfenden Schädlinge pilzlicher und/oder bakterieller Natur sind, insbesondere aus Plasmopara viticola, Botrytis cineria, Phomopsis viticola Sacc, Oidium, bestehen.

5. Verfahren nach einem der vorhergehenden Ansprüche,
dadurch gekennzeichnet,
daß die $H_2O_2$ enthaltende wässrige Lösung wenigstens ein die Schädlingsbekämpfung unterstützender Wirkstoff und/oder wenigstens ein pflanzenstärkender Wirkstoff beigemengt wird.

6. Verfahren nach Anspruch 5,
dadurch gekennzeichnet,
daß als die Schädlingsbekämpfung unterstützender Wirkstoff eine Kalziumverbindung beigemengt wird.

7. Verfahren nach Anspruch 5,
dadurch gekennzeichnet,
daß als pflanzensstützender Wirkstoff eine Magnesiumverbindung beigemengt wird.

8. Verfahren nach Anspruch 7,
dadurch gekennzeichnet,
daß die Magnesiumverbindung Magnesiumchlorid ($MgCl_2$) oder Magnesiumsulfat ($MgSo_4$ ) ist.

9. Verfahren nach einem der vorhergehenden Ansprüche,
dadurch gekennzeichnet,
daß die Mitverwendung anderer Zusätze als ein die Schädlingsbekämpfung unterstützender Wirkstoff und/oder ein pflanzenstärkender Wirkstoff ausgeschlossen ist.

**Claims**

1. A method of pest control for plants, characterised in that an aqueous solution containing from 0.1 to 15 % hydrogen peroxide ($H_2O_2$) is sprayed on to the plants, plants occurring in horticulture being excluded.

2. A method according to Claim 1, characterised in that the aqueous solution used has an $H_2O_2$ content of from 0.5 to 5 %.

3. A method according to Claims 1 and 2, characterised in that the plants to be treated are grape and hop vines.

**4.** A method according to any one of the preceding Claims, characterised in that the pests to be controlled are of a fungal and/or bacterial nature, and in particular consist of Plasmopara viticola, Botrytis cineria, Phomopsis viticola Sacc, Oidium.

**5.** A method according to any one of the preceding Claims, characterised in that at least one active ingredient assisting pest control and/or at least one plant-strengthening active ingredient is added to the aqueous solution containing the $H_2O_2$.

**6.** A method according to Claim 5, characterised in that a calcium compound is added as the active ingredient assisting pest control.

**7.** A method according to Claim 5, characterised in that a magnesium compound is added as the plant-strengthening active ingredient.

**8.** A method according to Claim 7, characterised in that the magnesium compound is magnesium chloride ($MgCl_2$) or magnesium sulphate ($MgSO_4$).

**9.** A method according to any one of the preceding Claims, characterised in that the concomitant use of other additives as an active ingredient assisting the pest control and/or a plant-strengthening active ingredient is excluded.

**Revendications**

**1.** Procédé de lutte contre les parasites des plantes, caractérisé en ce qu'on pulvérise sur celles-ci une solution aqueuse renfermant de 0,1 à 15 % de peroxyde d'hydrogène ($H_2O_2$), les plantes de jardinage étant exclues.

**2.** Procédé selon la revendication, caractérisé en ce que la solution aqueuse utilisée renferme une proportion de 0,5 à 5 % de $H_2O_2$.

**3.** Procédé selon la revendication 1 ou 2, caractérisé en ce que les plantes à traiter sont constituées par la vigne et le houblon.

**4.** Procédé selon l'une des revendications précédentes, caractérisé en ce que les parasites à combattre sont de la classe des champignons et/ou des bactéries, en particulier les Plasmopara viticola, Botrytis cineria, Phomopsis viticola Sacc, Oidium.

**5.** Procédé selon l'une des revendications précédentes, caractérisé en ce que la solution aqueuse renfermant $H_2O_2$ est mélangée à au moins une substance renforçant la lutte contre les parasites et/ou au moins une substance fortifiant les plantes.

**6.** Procédé selon la revendication 5, caractérisé en ce que la substance renforçant la lutte contre les parasites est un composé de calcium.

**7.** Procédé selon la revendication 5, caractérisé en ce que la substance fortifiant les plantes est un composé du magnésium.

**8.** Procédé selon la revendication 7, caractérisé en ce que le composé du magnésium est constitué par le chlorure de magnésium ($MgCl_2$) ou le sulfate de magnésium ($MgSO_4$).

**9.** Procédé selon l'une des revendications précédentes, caractérisé en ce que l'utilisation conjointe d'autres additifs comme une substance renforçant la lutte contre les parasites et/ou une substance fortifiant les plantes est exclue.